(19) **Europäisches Patentamt**

**European Patent Office**

**Office européen des brevets**

(11) Veröffentlichungsnummer: **0 175 949**
**B1**

(12) ## EUROPÄISCHE PATENTSCHRIFT

(45) Veröffentlichungstag der Patentschrift:
**11.05.88**

(51) Int. Cl.⁴: **F 24 H 1/10, F 24 H 9/18**

(21) Anmeldenummer: **85110790.4**

(22) Anmeldetag: **28.08.85**

(54) Wärmeerzeuger zum Erwärmen flüssiger Strömungsmittel.

(30) Priorität: **06.09.84 DE 3432717**

(43) Veröffentlichungstag der Anmeldung:
**02.04.86 Patentblatt 86/14**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**EP - A - 0 044 349**
**EP - A - 0 062 729**
**DE - A - 2 719 956**
**DE - B - 1 258 063**

**CHEMIE INGENIEUR-TECHNIK, Band 47, Nr. 12,**
**September 1975, Seite A 360, Weinheim, DE;**
**Koaxial-Wärmeüberträger**

(73) Patentinhaber: **gwk Gesellschaft Wärme Kältetechnik mbH, Friedrich-Ebert-Strasse 310,**
**D-5883 Kierspe 2 (DE)**

(72) Erfinder: **Zeppenfeld, Reinhard, Dipl.-Ing., Rilkeweg 1,**
**D-5883 Kierspe (DE)**

(74) Vertreter: **Köchling, Conrad-Joachim et al,**
**Patentanwälte Dipl.-Ing. Conrad Köchling, Dipl.-Ing.**
**Conrad-Joachim Köchling Fleyer Strasse 135,**
**D-5800 Hagen 1 (DE)**

## Beschreibung

Die Erfindung betrifft einen Wärmeerzeuger zur Erwärmung flüssiger Strömungsmittel, nämlich Öl bzw. ölhaltige Emulsionen für Temperiergeräte zum Beispiel zur Anwendung bei Spritzgiesswerkzeugen, Druckgusswerkzeugen, Extruderzylindern und -schnecken, Reaktionsbehälter im Labor usw., bestehend aus einem Behälter mit einem Strömungsmittelzulauf und mit einem Strömungsmittelablauf sowie aus einem im Behälter angeordneten elektrischen Heizkörper.

Derartige Wärmeerzeuger sind hinreichend bekannt und bislang zur Aufheizung relativ grosser Strömungsmittelmengen konzipiert.

Dabei ist die aufheizende Strömungsmittelmenge von deren Strömungsgeschwindigkeit innerhalb des Wärmeerzeugers und der Heizleistung abhängig, um auch partielle Überhitzungen des Strömungsmittels, welches bei ölhaltigen Strömungsmitteln zu deren Schädigung führen würde, zu vermeiden.

Daraus resultiert, dass bei bekannten Wärmeerzeugern bei Verminderung der Strömungsmittelmenge auch die Strömungsgeschwindigkeit des Strömungsmittels innerhalb des Wärmeerzeugers absinkt, was eine Überhitzung des Strömungsmittels zur Folge hat.

Aufgabe der Erfindung ist es nun einen Wärmeerzeuger der im Oberbegriff des Anspruches 1 angegebenen Art derart zu verbessern, dass auf einfache und rationelle Weise unter Verbesserung des Wirkungsgrades auch die Aufheizung relativ geringer Strömungsmittelmengen erreichbar ist, ohne dabei die Strömungsmittel zu überhitzen.

Die Erfindung geht von der Erkenntnis aus, unter Beibehaltung einer relativ grossen Heizfläche eine relativ hohe Strömungsgeschwindigkeit auch für relativ geringe Strömungsmittelmengen sicherzustellen und dazu den Durchflussquerschnitt für das den Heizkörper umströmende Strömungsmittel so gering wie möglich zu machen.

Die Lösung dieser Aufgabe ist dadurch gekennzeichnet, dass der elektrische Heizkörper wendel- und/oder spiralförmig gewickelt ist und das Behältermantelrohr dem Verlauf des elektrischen Heizkörpers folgend und ihn mit Spiel umfassend geformt ist, wobei das Spiel zwischen dem elektrischen Heizkörper und dem Behältermantelrohr etwa der halben Dicke des elektrischen Heizkörpers entspricht.

Daraus ergibt sich bei relativ geringem Raumbedarf für den gesamten Wärmeerzeuger eine relativ grosse Heizfläche.

Zudem ist damit auf einfache Weise auch ein relativ kleiner Durchflussquerschnitt für das Strömungsmittel erzielbar.

Ausserdem ist hierbei innerhalb des Wärmeerzeugers der Durchflusswiderstand nunmehr konstant.

Darüber hinaus sind für kleinere Strömungsmittelmengen Pumpen kleinerer Leistung nötig, woraus sich auch eine Wirkungsgraderhöhung ergibt. Dabei ist es vorteilhaft, wenn der elektrische Heizkörper und das Behältermantelrohr zueinander ähnlich profiliert sind.

Eine fertigungstechnisch besonders günstige Ausgestaltung des vorbeschriebenen Wärmeerzeugers ist dadurch gekennzeichnet, dass der elektrische Heizkörper und das Behältermantelrohr zylindrisch profiliert sind, wobei der Durchmesser des Behältermantelrohres etwa doppelt so gross wie der Durchmesser des elektrischen Heizkörpers ist.

Hiermit ist auf einfache Weise und rationelle Weise ein Spiel zwischen dem elektrischen Heizkörper- und dem Behältermantelrohr von zum Beispiel ca. 3 mm erreichbar.

Zur weiteren Vergrösserung der Heizfläche ohne Erhöhung des Raumbedarfes für den gesamten Wärmeerzeuger ist es vorteilhaft, wenn der elektrische Heizkörper und das Behältermantelrohr von der Kreisform abweichend, insbesondere oval profiliert sind und dass der elektrische Heizkörper und das Behältermantelrohr so gewickelt sind, dass deren grosse Durchmesser zur Mittenachse der Wendel bzw. der Spirale parallel verlaufend gerichtet sind.

Hierzu kennzeichnet sich eine unter Umständen bevorzugte Variante dadurch, dass im Behältermantelrohr mehrere zueinander und zum Behältermantelrohr gleichgerichtete elektrische Heizkörper vorgesehen sind, wobei die Heizkörper zumindest gruppenweise gleiche Windungsdurchmesser aufweisen, wobei vorzugsweise ferner die Heizkörper und das Behältermantelrohr zweckmässigerweise zylindrisch profiliert sein sollten.

Ausführungsbeispiele der Erfindung sind in der Zeichnung dargestellt und werden im folgenden näher beschrieben.

Es zeigen:

Fig. 1 eine schematische Darstellung eines Teiles eines Wärmeerzeugers in der Vorderansicht;

Fig. 2 desgleichen im Schnitt der Linie I-I;

Fig. 3 bis 5 Varianten desselben im Querschnitt.

Allen Ausführungsformen ist mindestens ein wendelförmig gewundener, elektrischer Heizkörper 1 und ein dem Verlauf des Heizkörpers folgendes und mit allseitigem und mindestens annähernd gleichmässigem Spiel umgebendes Behältermantelrohr 2 gemeinsam.

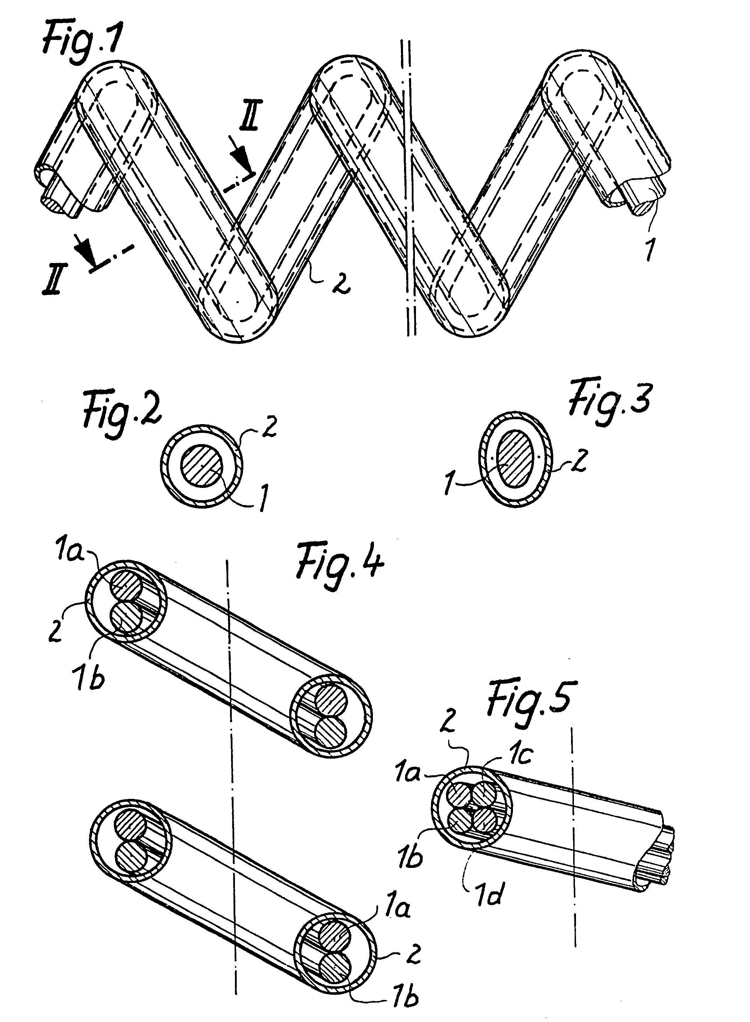

Der Heizkörper und das Behältermantelrohr sind gemäss der Figuren 1, 2, 4 und 5 zylindrisch profiliert. Gemäss der Figuren 1 und 2 hat das Behälterrohr 2 einen Durchmesser von ca. 15 bis 20 mm und der zu letzterem koaxial angeordnete Heizkörper 1 einen Durchmesser von 8 bis 10 mm, so dass sich zwischen dem Heizkörper 1 und dem Behältermantelrohr 2 ein Spielraum von ca. 3 bis 5 mm ergibt, der vom Strömungsmittel durchströmt wird.

Gemäss der Fig. 3 sind der elektrische Heizkörper 1 und das Behältermantelrohr 2 oval profiliert, woraus sich für den Heizkörper bei gleichem Querschnitt und gleicher Länge wie bisher eine grössere Heizfläche ergibt.

In Fig. 4 sind in das Behältermantelrohr 2 zwei zu letzterem gleichgerichtete elektrische Heizkörper 1 und 1a eingefügt, wobei beide Heizkörper gleiche Windungsdurchmesser haben, um beim Wickeln auch gleichhohe Widerstände auf das Wickelwerkzeug auszuüben, so dass auch ein gleiches Spiel für beide Heizkörper zum Behältermantelrohr erreichbar ist.

Gemäss Fig. 5 sind im Behältermantelrohr 2 vier elektrische Heizkörper 1a, 1b, 1c und 1d vorge-

sehen, wobei die Heizkörper derart zu zwei Gruppen vereinigt sind, dass die Heizkörper jeder Gruppe gleiche Windungsdurchmesser aufweisen, um das Wickeln zu vereinfachen.

Dabei ist es möglich, die Heizkörper und das Behältermantelrohr nach dem Wendeln zusammenzufügen, wozu die Heizkörper gemeinsam in das Behältermantelrohr eingeschraubt werden.

Eine fertigungstechnisch preiswertere Herstellungsmöglichkeit ist aber die, zunächst den elektrischen Heizkörper in das Mantelrohr einzufügen und daran anschliessend den Heizkörper und das Behältermantelrohr gemeinsam wendelförmig zu verformen.

Bei alledem muss der elektrische Heizkörper selbstverständlich flüssigkeitsdicht ausgebildet sein.

Um einen möglichst flachen, erfindungsgemäss ausgebildeten Wärmeerzeuger zu erhalten, wird das Behälterrohr samt elektrischem Heizkörper spiralförmig gewickelt.

## Patentansprüche

1. Wärmeerzeuger zum Erwärmen von Öl bzw. ölhaltigen Emulsionen für Temperiergeräte, bestehend aus einem Behälter mit einem Strömungsmittelzulauf und mit einem Strömungsmittelablauf sowie aus einem im Behälter angeordneten elektrischen Heizkörper, dadurch gekennzeichnet, dass der elektrische Heizkörper (1) wendel- und/oder spiralförmig gewickelt ist und das Behältermantelrohr (2) dem Verlauf des elektrischen Heizkörpers (1) folgend und ihn mit Spiel umfassend geformt ist, wobei das Spiel zwischen dem elektrischen Heizkörper (1) und dem Behältermantelrohr (2) etwa der halben Dicke des elektrischen Heizkörpers entspricht.

2. Wärmeerzeuger nach Anspruch 1, dadurch gekennzeichnet, dass der elektrische Heizkörper (1) und das Behältermantelrohr (2) zueinander ähnlich profiliert sind.

3. Wärmeerzeuger nach Anspruch 1, dadurch gekennzeichnet, dass der elektrische Heizkörper (1) und das Behältermantelrohr (2) zylindrisch profiliert sind, wobei der Durchmesser des Behältermantelrohres (2) etwa doppelt so gross wie der Durchmesser des elektrischen Heizkörpers (1) ist.

4. Wärmeerzeuger nach einem der vorherigen Ansprüche, dadurch gekennzeichnet, dass der elektrische Heizkörper (1) und das Behältermantelrohr (2) von der Kreisform abweichend, insbesondere oval profiliert sind und dass der elektrische Heizkörper (1) und das Behältermantelrohr (2) so gewickelt sind, dass deren grosse Durchmesser zur Mittenachse der Wendel bzw. der Spirale parallel verlaufend gerichtet sind.

5. Wärmeerzeuger nach einem der vorherigen Ansprüche, dadurch gekennzeichnet, dass im Behältermantelrohr (2) mehrere zueinander und zum Behältermantelrohr gleichgerichtete elektrische Heizkörper (1a, 1b, 1c, 1d) vorgesehen sind, wobei die elektrischen Heizkörper zumindest gruppenweise gleiche Windungsdurchmesser aufweisen.

## Claims

1. Heat producer for warming oil or oil-containing emulsions for temperature controlling devices, consisting of a container with a circulation medium inlet and a circulation medium outlet with an electric heater in the container, characterized in that the electric heater (1) has a coiled and/or spiral shape and the container tube (2) is formed to follow the shape of the electric heater (1) with a play between them, wherein the play between the electric heater (1) and the container tube (2) is substantially half the thickness of the electric heater.

2. Heat producer according to Claim 1, characterized in that the electric heater (1) and the container tube (2) have substantially the same shape.

3. Heat producer according to Claim 1, characterized in that the electric heater (1) and the container tube (2) are cylindrical, whereby the diameter of the container tube (2) is about twice the diameter of the electric heater (1).

4. Heat producer according to any one of the preceding Claims, characterized in that the electric heater (1) and the container tube (2), deviating from a circular shape are, in particular, oval shaped and in that the electric heater (1) and the container tube (2) are wound in such a way that their large diameters run parallel to the middle axes of the coils or spirals.

5. Heat producer according to any one of the preceding Claims, characterized in that in the container tube (2) a plurality of electric heating elements (1a, 1b, 1c, 1d) are provided, extending in the same direction as one another and as the container tube (2), whereby the electric heating elements, at least in groups, have the same spiral diameter.

## Revendications

1. Générateur de chaleur, pour chauffer de l'huile ou des émulsions contenant de l'huile, pour appareils d'amenée à température tempérée, composé d'un récipient avec une entrée pour un milieu fluide et une sortie pour un milieu fluide, ainsi que d'un corps de chauffage électrique disposé dans le récipient, caractérisé en ce que le corps de chauffage électrique (1) est enroulé en hélice et/ou en spirale, et le tube enveloppe (2) du récipient est façonné pour suivre le corps de chauffage électrique (1) et l'entourer avec du jeu, le jeu entre les corps de chauffage électrique (1) et le tube enveloppe du récipient (2) correspondant à peu près à la moitié de l'épaisseur du corps de chauffage électrique.

2. Générateur de chaleur selon la revendication 1, caractérisé en ce que le corps de chauffage électrique (1) et le tube enveloppe (2) du récipient sont profilés de manière analogue.

3. Générateur de chaleur selon la revendication 1, caractérisé en ce que le corps de chauffage électrique (1) et le tube enveloppe (2) du récipient sont profilés de manière cylindrique, le diamètre du tube enveloppe (2) du récipient étant à peu près le double du diamètre du corps de chauffage électrique (1).

4. Générateur de chaleur selon l'une des revendications précédentes, caractérisé en ce que le corps de chauffage électrique (1) et le tube enveloppe (2) du récipient sont formés suivant un profil s'écartant de la forme circulaire, et sont en particulier formés suivant un profil oval, et que le corps de chauffage électrique (1) et le tube enveloppe (2) du récipient sont enroulés de manière telle que leurs grands diamètres sont dirigés parallèlement à l'axe de l'hélice ou de la spirale.

5. Générateur de chaleur selon l'une des revendications précédentes, caractérisé en ce que plusieurs corps de chauffage électriques (1a, 1b, 1c, 1d) dirigés parallèlement les uns aux autres et au tube enveloppe du récipient, sont prévus dans le tube enveloppe (2) du récipient, les corps de chauffage électriques présentant au moins par groupe un même diamètre d'envidage.

0 175 949

Fig.1

Fig.2   Fig.3

Fig.4

Fig.5

5